## Europäisches Patentamt

## European Patent Office

## Office européen des brevets

(19)

(11) Veröffentlichungsnummer: **0 009 226**
**A2**

(12) # EUROPÄISCHE PATENTANMELDUNG

(21) Anmeldenummer: **79103458.0**

(22) Anmeldetag: **15.09.79**

(51) Int. Cl.³: **F 03 D 3/06**

(30) Priorität: **16.09.78 DE 2840390**

(43) Veröffentlichungstag der Anmeldung: **02.04.80**
**Patentblatt 80/7**

(84) Benannte Vertragsstaaten: **AT BE CH DE FR GB IT NL SE**

(71) Anmelder: **Eichholz, Heinz, Speller Strasse 31, D-4441 Schapen (DE)**

(72) Erfinder: **Eichholz, Heinz, Speller Strasse 31, D-4441 Schapen (DE)**

(74) Vertreter: **Schulze Horn, Stefan, Dipl.-Ing. et al, Goldstrasse 36, D-4400 Münster (DE)**

(54) **Windkraftmaschine.**

(57) Windkraftmaschine mit wenigstens einem um eine Hauptachse kreisenden Flügel, der um seine eigene, parallel zur Hauptachse liegende Achse mit halber Drehzahl und entgegengesetzter Drehrichtung drehbar ist, wobei die Drehachsen im wesentlichen waagerecht angeordnet sind, die gesamte Vorrichtung um eine vertikale Achse drehbar ist und die Anstellung der Hauptachse zum Wind durch eine Windfahne gesteuert wird, dadurch gekennzeichnet, dass die vertikale Achse (1) in bezug auf die Hauptachse (4) exzentrisch angeordnet ist, der Winkel $\alpha$ zwischen den Achsen (4, 5, 5') und der Windfahne (12) gegen eine Gegenkraft durch den Winddruck einstellbar ist und die Gegenkraft so gross ist, dass sich mit wachsender Windgeschwindigkeit eine Verringerung des Winkels $\beta$ zwischen der Windrichtung und der Längsachse des Flügels (3) ergibt.

Die Erfindung betrifft eine Windkraftmaschine mit wenigstens einem um eine Hauptachse kreisenden Flügel, der um seine eigene, parallel zur Hauptachse liegende Achse mit halber Drehzahl und entgegengesetzter Drehrichtung drehbar ist, wobei die Drehachsen im wesentlichen waagerecht angeordnet sind, die gesamte Vorrichtung um eine vertikale Achse drehbar ist und die Anstellung der Hauptachse zum Wind durch eine Windfahne gesteuert wird.

Eine derartige Windkraftmaschine ist aus dem deutschen Gebrauchsmuster 7 811 145 bekannt. Bei dieser und anderen bekannten Windkraftmaschinen ergibt sich das Problem, daß einerseits zur Erhöhung der Leistung, insbesondere bei geringen Windstärken, die dem Wind ausgesetzten Flächen möglichst groß sein müssen und daß andererseits große Flächen bei starkem Wind, wie er etwa bei einem Sturm auftritt, zu erheblichen Belastungen der Vorrichtung führen.

Es ist Aufgabe der Erfindung, diese Nachteile des Standes der Technik zu vermeiden und eine Windkraftmaschine zu schaffen, bei der die Leistung erhöht und gleichzeitig die Sturmsicherheit verbessert wird.

Diese Aufgabe wird bei einer Windkraftmaschine der eingangs genannten Art erfindungsgemäß dadurch gelöst, daß

- die vertikale Achse in Bezug auf die Hauptachse exzentrisch angeordnet ist,

- der Winkel α zwischen den Achsen und der Windfahne gegen eine Gegenkraft durch den Winddruck einstellbar ist und

- die Gegenkraft so groß ist, daß sich mit wachsender Windgeschwindigkeit eine Verringerung des Winkels β zwischen der Windrichtung und der Längsachse des Flügels ergibt.

Vorteilhaft wird der Winkel α derart eingestellt, daß auch bei geringsten Windstärken der Winkel β kleiner als 90° ist. Es hat sich gezeigt, daß durch diese schräge Anströmung der Flügel eine besonders hohe Leistung erzielt wird.

Vorteilhaft wird die Gegenkraft mittels einer Schrägstellung der die Windfahne tragenden Achse durch die Schwerkraft gebildet. Die Gegenkraft kann auch durch einen gegen eine konstante oder je nach Lage des Hydraulikkolbens einstellbare Kraft arbeitenden Hydraulikkolben aufgebracht werden. Durch die beschriebene Konstruktion wird erreicht, daß bei starkem Wind der Winkel α verkleinert wird. Hierdurch wird die Anstellung der Hauptachse zum Wind mit zunehmendem Wind verringert und eine zu starke Belastung der Vorrichtung, die zu ihrer Zerstörung führen würde, wird zuverlässig verhindert.

Zur Dämpfung der Bewegung der Windfahne relativ zur Richtung der Achsen ist vorteilhaft ein Stoßdämpfer vorgesehen.

Die Übertragung der Rotationsenergie von der Hauptachse auf einen Verbraucher erfolgt vorteilhaft über mit geeigneten Mitnehmern versehene Drahtseile.

Zur Herabsetzung der auftretenden Drehmomente wird die Rotationsenergie der Hauptachse vorteilhaft von einem Rad abgenommen, dessen Durchmesser etwa der Länge der die Flügel tragenden Träger entspricht, und auf ein wesentlich kleineres Rad übertragen.

Eine leichte Anpassung an räumliche Gegebenheiten wird durch mindestens eine Umlenkung des energieüber-tragenden Drahtseils erreicht.

Die Übertragung der Drehung der Hauptachse mit halber Drehzahl und entgegengesetzter Drehrichtung auf die Flügel erfolgt vorteilhaft durch mit geeigneten Mitnehmern versehene Drahtseile und durch gestellfeste Seilräder und flügelfeste Seilräder, deren Durchmesser im Verhältnis 1:2 stehen.

Im folgenden wird ein Ausführungsbeispiel der Erfindung anhand von Zeichnungen näher beschrieben. Es zeigen

Figur 1 eine erfindungsgemäße Windkraftmaschine in Windrichtung,

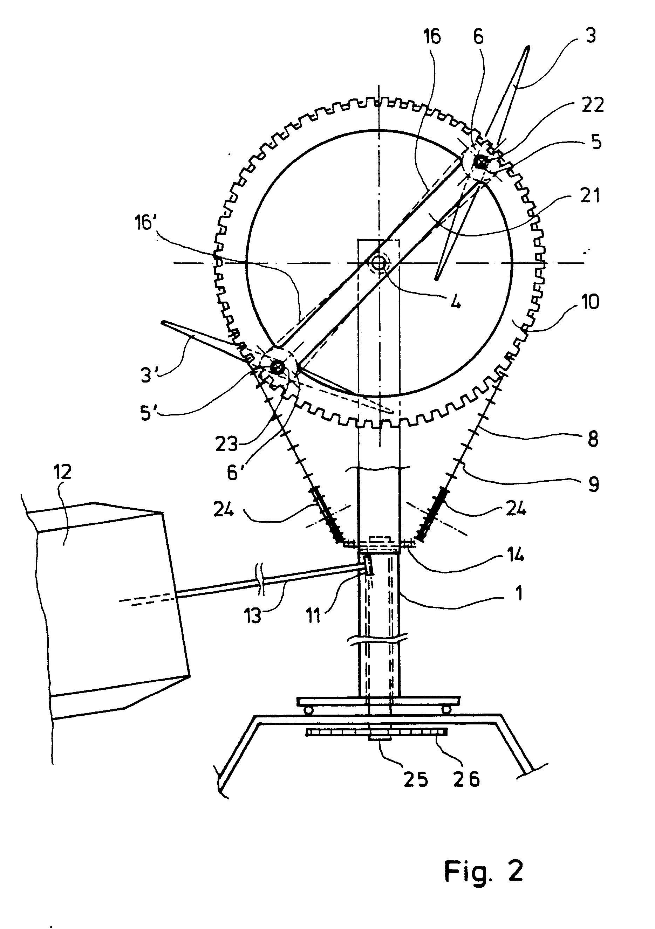

Figur 2 die Windkraftmaschine gemäß Figur 1 quer zur Windrichtung und

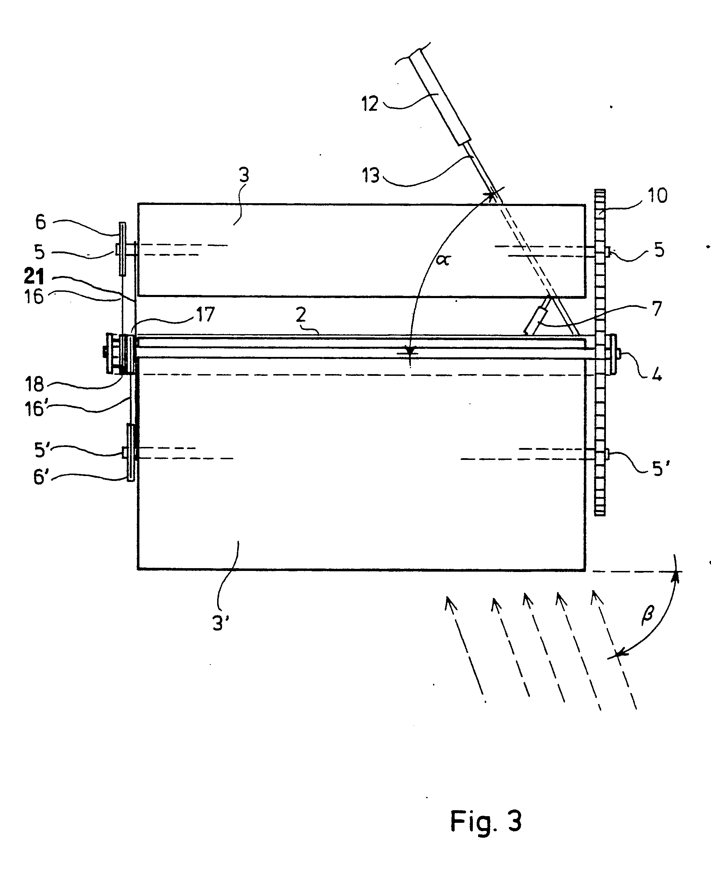

Figur 3 die Windkraftmaschine gemäß Figur 1 und 2 von oben gesehen.

Am oberen Ende einer vertikalen Achse 1 ist ein gabelförmiger Rotationsrahmen 2 drehbar angebracht. Die vertikale Achse 1 ist in Bezug auf die Hauptachse 4 exzen-trisch angeordnet. Der Rotationsrahmen 2 besteht aus U-förmig gebogenem Metallprofil, welches an den freien Enden des U's Bohrungen und Kugellager zur Aufnahme von Wellenenden besitzt. Durch die Bohrungen ist eine Hauptachse 4 hindurchgesteckt und festgelegt. Die Hauptachse 4 trägt starr verbunden zwei Träger 21, welche ebenfalls aus Metallprofil hergestellt sind. Die Träger

4

21 sind mit der Hauptachse 4 so verbunden, daß die Länge der freiliegenden Arme auf beiden Seiten gleich ist. Die freiliegenden Arme der Träger 21 sind ebenfalls mit Bohrungen 22 und 23 versehen und mit Kugellagern ausgestattet, durch die weitere Achsen 5 bzw. 5' rotierbar durchgesteckt und befestigt sind.

An den Achsen 5 bzw. 5' sind Flügel 3 und 3' so angebracht, daß sie bei Bewegung der Träger 21 um die Hauptachse 4 kreisen. An jeweils einem Ende der Achsen 5 und 5' sind flügelfeste Seilräder 6 und 6' mit Ausnehmungen zur Aufnahme der Mitnehmer 9 der Seile 16 angebracht. Am Ende der Hauptachse 4 sind zwei gleichartige gestellfeste Seilräder 17 und 18 angebracht, deren Durchmesser halb so groß ist wie der Durchmesser der Seilräder 6 und 6'. Mit Hilfe der Seilräder 17 und 18, der Seile 16 und 16' und der Seilräder 6 und 6' wird die Drehung der Hauptachse 4 mit halber Drehgeschwindigkeit und umgekehrter Drehrichtung auf die Bewegung der Achsen 5 und 5' übertragen. Die Flügel 3 und 3' drehen sich also gegenüber der Drehzahl der Hauptachse 4 mit halber Drehzahl und entgegengesetzer Drehrichtung um ihre eigenen Achsen 5 und 5'. Hierdurch wird der Effekt ermöglicht, daß entgegen der Windrichtung der kleinste Widerstand und mit der Windrichtung der größte Widerstand in Bezug auf die Flächen der Flügel 3 und 3' ermöglicht werden.

Die Vorrichtung kann grundsätzlich auch mit einem einzigen Flügel arbeiten. Weiterhin ist es möglich, drei oder vier Flügel einzubauen. Es hat sich gezeigt, daß von der konstruktiven Seite her die erfindungsgemäße Windkraftmaschine mit zwei gegenüberliegenden Flügeln optimal ausgerüstet ist.

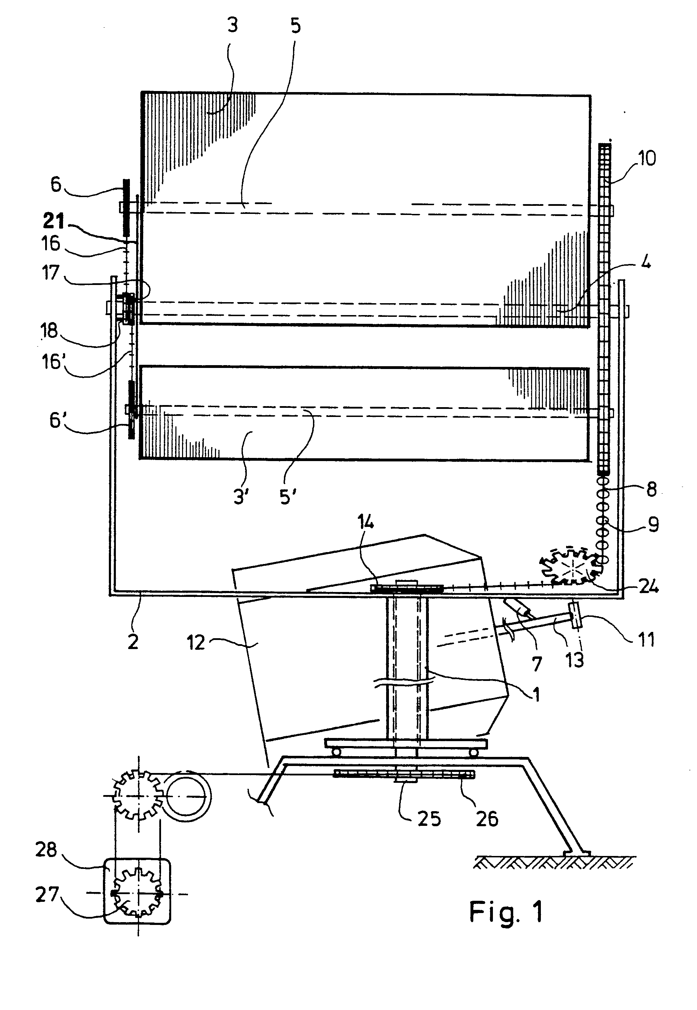

Bei der Gesamtkonstruktion kann auch mit Vorteil davon ausgegangen werden, daß auf eine Hauptachse 4, welche quer zur Bewegungsrichtung der Flügel liegt, verzichtet werden kann. In diesem Fall wird an den Seiten des Rotationsrahmens 2 jeweils nur ein Achsstummel vorgesehen. Es ist dann möglich, die Flügel noch größer zu machen, d. h. sie mit ihren freien Enden durch den Bereich hindurchschwingen zu lassen, der in der Figur 1 gestrichelt die Andeutung der Hauptachse 4 bezeichnet. Das bedeutet, daß die halbe Breite der Segelelemente größer ist als der Abstand der Hauptachse 4 und der Achsen 5 bzw. 5'.

Die Anstellung der Hauptachse zum Wind wird durch eine an einer Stange 13 befestigte Windfahne 12 gesteuert. Dabei ist der Winkel $\alpha$ zwischen den Achsen 4, 5 und 5' und der Windfahne 12 gegen eine Gegenkraft durch den Winddruck einstellbar. Die Gegenkraft ist so groß, daß sich mit wachsender Windgeschwindigkeit eine Verringerung des Winkels $\beta$ zwischen der Windrichtung und der Längsachse der Flügel 3 und 3' ergibt. Die Gegenkraft wird mittels einer Schrägstellung der die Stange 13 tragenden Achse 11 durch die Schwerkraft gebildet. Zur Dämpfung der Bewegung der Windfahne 12 relativ zur Richtung der Achsen ist ein Stoßdämpfer 7 vorgesehen. Mit zunehmender Windstärke wird also der Winkel $\alpha$ verkleinert. Hierdurch ergibt sich in Zusammenhang mit der exzentrischen Lage der vertikalen Rotationsachse 1 eine Verringerung des Winkels $\beta$ zwischen der Windrichtung und der Längsachse der Flügel 3 und 3', so daß eine Zerstörung der Anlage bei Sturm sicher vermieden wird.

Die Übertragung der Rotationsenergie von der Hauptachse 4 auf einen Verbraucher erfolgt über mit geeigneten Mitnehmern 9 versehene Drahtseile 8. Diese Mitnehmer 9 sind ebenso wie bei den Seilen 16 scheibenförmig und in regelmäßigen Abständen auf den Seilen aufgereiht und befestigt. Sie werden von entsprechenden Ausnehmungen der Seilräder aufgenommen. Die Rotationsenergie der Hauptachse 4 wird zunächst von einem großen Rad 1o abgenommen, dessen Durchmesser etwa der Länge der die Flügel 3 und 3' tragenden Träger 21 entspricht, und auf ein wesentlich kleineres Rad 14 übertragen. Durch Umlenkräder 24 wird dabei eine Umlenkung des Seils erreicht. Das Rad 14 ist über eine Welle 25 mit einem wiederum größeren Rad 26 starr verbunden. Von diesem Rad 26 wird wiederum über eine Umlenkung die Rotationsenergie auf ein relativ kleines Rad 27, das auf der Welle eines Generators 28 angeordnet ist, übertragen. Es wird also ein großes Übersetzungsverhältnis, d. h. von mindestens 1:1oo, erreicht. Die auftretenden Drehmomente werden herabgesetzt, und der Generator wird mit hoher Drehzahl angetrieben.

Der Stoßdämpfer 7 kann als eine Hydraulikkolben-/zylinderanordnung ausgebildet sein, die in Verbindung mit Federn und einem Druckreservoir arbeitet.

Die erfindungsgemäße Windkraftmaschine erlaubt es, die dem Wind ausgesetzten Flächen sehr groß zu machen, ohne dabei Gefahr zu laufen, daß die Anlage bei starkem Wind zerstört wird. Es kann also bei allen Windverhältnissen Energie auf optimale Weise gewonnen werden. Daher kann von einer hervorragenden Lösung der anstehenden Probleme gesprochen werden.

P a t e n t a n s p r ü c h e :

1. Windkraftmaschine mit wenigstens einem um eine Hauptachse kreisenden Flügel, der um seine eigene, parallel zur Hauptachse liegende Achse mit halber Drehzahl und entgegengesetzter Drehrichtung drehbar ist, wobei die Drehachsen im wesentlichen waagerecht angeordnet sind, die gesamte Vorrichtung um eine vertikale Achse drehbar ist und die Anstellung der Hauptachse zum Wind durch eine Windfahne gesteuert wird, dadurch gekennzeichnet, daß

- die vertikale Achse (1) in Bezug auf die Hauptachse (4) exzentrisch angeordnet ist,
- der Winkel α zwischen den Achsen (4, 5, 5') und der Windfahne (12) gegen eine Gegenkraft durch den Winddruck einstellbar ist und
- die Gegenkraft so groß ist, daß sich mit wachsender Windgeschwindigkeit eine Verringerung des Winkels β zwischen der Windrichtung und der Längsachse des Flügels (3) ergibt.

2. Windkraftmaschine nach Anspruch 1, gekennzeichnet durch eine Einstellung des Winkels α derart, daß auch bei geringsten Windstärken der Winkel β kleiner als 90° ist.

3. Windkraftmaschine nach Anspruch 1 oder 2, dadurch gekennzeichnet, daß die Gegenkraft mittels einer Schrägstellung der die Windfahne (12) tragenden Achse (11) durch die Schwerkraft gebildet wird.

4. Windkraftmaschine nach Anspruch 1 bis 3, dadurch gekennzeichnet, daß die Gegenkraft durch einen gegen eine konstante oder je nach Lage des Hydraulikkolbens einstellbare Kraft arbeitenden Hydraulikkolben aufgebracht wird.

5. Windkraftmaschine nach Anspruch 1 bis 4, gekennzeichnet durch einen Stoßdämpfer (7) zur Dämpfung der Bewegung der Windfahne (12) relativ zur Richtung der Achsen (4, 5, 5').

6. Windkraftmaschine nach Anspruch 1 bis 5, dadurch gekennzeichnet, daß die Übertragung der Rotationsenergie von der Hauptachse (4) auf einen Verbraucher über mit geeigneten Mitnehmern (9) versehene Drahtseile (8) erfolgt.

7. Windkraftmaschine nach Anspruch 6, dadurch gekennzeichnet, daß die Rotationsenergie der Hauptachse (4) von einem Rad (1o) abgenommen wird, dessen Durchmesser etwa der Länge der die Flügel (3, 3') tragenden Träger (21) entspricht und auf ein wesentlich kleineres Rad (14) übertragen wird.

8. Windkraftmaschine nach Anspruch 6 oder 7, gekennzeichnet durch mindestens eine Umlenkung des die Energie übertragenden Drahtseils (8).

9. Windkraftmaschine nach Anspruch 1 bis 8, dadurch gekennzeichnet, daß die Übertragung der Drehung der Hauptachse (4) mit halber Drehzahl und entgegengesetzter Drehrichtung auf die Flügel (3, 3') durch mit geeigneten Mitnehmern (9) versehene Drahtseile (16) und durch gestellfeste Seilräder (17, 18) und flügelfeste Seilräder (6,6'), deren Durchmesser im Verhältnis 1:2 steher, erfolgt.

Fig. 1

0009226

Fig. 2

Fig. 3